# FASCICULE DE BREVET EUROPEEN

(11) **EP 1 193 146 B1**
(45) Date de publication et mention de la délivrance du brevet: **07.04.2004**
(21) Numéro de dépôt: 01123008.3
(22) Date de dépôt: 26.09.2001
(51) Int. Cl.: B60R 25/04

(54) **Ensemble assurant une fonction antivol par échange de données dont certaines sont représentatives d'au moins un utilisateur autorisé du véhicule automobile**
Vorrichtung zum Diebstahlschutz durch Austausch von Daten, die teils repräsentativ für mindestens einen berechtigten Kraftfahrzeug-Benutzer sind
Device for theft protection based on an exchange of data which is partly representative of at least one authorized user of an automotive vehicle

(30) Priorité: 27.09.2000 FR 0012258
(43) Date de publication de la demande: 03.04.2002
(73) Titulaire: VALEO SECURITE HABITACLE S.A.S., 94042 Créteil Cédex (FR)
(72) Inventeur: Batty, Raoul, 58000 Nevers (FR); Lesueur, Guillaume, 58000 Nevers (FR)
(74) Mandataire: Hervouet, Sylvie

(56) Documents cités:
- EP-A- 1 003 123
- EP-A- 1 026 054
- DE-A- 19 853 075
- DE-C- 19 641 898
- US-A- 4 810 200
- US-A- 5 521 443

## Description

La présente invention concerne un ensemble pour véhicule automobile assurant notamment une fonction antivol par échange de données dont certaines sont représentatives d'au moins un utilisateur autorisé du véhicule selon le préambule de la revendication 1, comme connu par DE- A-19853075.

On connaît aussi déjà dans l'état de la technique, notamment d'après FR-A-2 779 563 (FR-98 07250) et FR-A-2 786 297 (FR-98 14571), un ensemble pour véhicule automobile destiné à échanger des données dont certaines sont représentatives d'au moins un utilisateur autorisé du véhicule, du type comprenant une bascule.

Des ensembles de ce type sont avantageusement utilisés pour assurer une fonction antivol d'un véhicule automobile. A cet effet, l'unité fixe d'échange de données est agencée dans l'habitacle du véhicule et assure la fonction antivol en traitant des données notamment celles représentatives de l'utilisateur autorisé.

Lorsque l'unité fixe d'échange de données a reconnu l'utilisateur autorisé celui-ci fait démarrer le moteur du véhicule habituellement au moyen d'un bouton, séparé de l'unité fixe, agencé dans une planche de bord ou une console de l'habitacle. L'arrêt du moteur du véhicule s'effectue également au moyen du bouton de démarrage.

Lorsque l'organe portatif est dans sa position stable dans le tunnel, il présente généralement une extrémité proximale faisant saillie à l'extérieur de ce tunnel. L'utilisateur peut donc retirer l'organe portatif du tunnel en saisissant cette extrémité saillante. Pour éviter que l'organe portatif soit retiré inopportunément du tunnel, l'unité fixe comporte habituellement des moyens de blocage de l'organe portatif dans sa position stable activés lorsque le véhicule est en marche.

L'invention a notamment pour but d'éviter le retrait inopportun de l'organe portatif du tunnel tout en facilitant l'extraction de l'organe portatif du tunnel et en limitant l'accès à cet organe portatif lorsque ce dernier est dans sa position stable.

A cet effet, l'invention a pour objet un ensemble pour véhicule automobile destiné à échanger des données dont certaines sont représentatives d'au moins un utilisateur autorisé du véhicule selon la revendication 1.

Suivant d'autres caractéristiques de cet ensemble:
- le tunnel est muni d'une extrémité d'accès débouchant dans une face de l'unité fixe, dite face d'accès, l'organe de commande d'éjection étant porté par la face d'accès de l'unité fixe ;
- l'extrémité d'accès de ce tunnel est délimitée par un organe limitant la zone de préhension de l'organe portatif lorsque ce dernier est dans sa position stable, afin de faire obstacle à la traction de l'organe portatif par un utilisateur dans un sens de retrait de cet organe portatif du tunnel tout en autorisant la poussée de l'organe portatif par l'utilisateur dans un sens opposé au sens de retrait ;
- l'unité fixe comprend un contacteur électrique d'activation de l'état de marche du véhicule, dit contacteur de marche, actionné par l'organe portatif en position stable ;
- les moyens d'éjection sont entraînés manuellement ;
- les moyens de commande de démarrage et les moyens de commande d'arrêt comprennent un contacteur électrique commun, dit contacteur de démarrage/arrêt, l'unité fixe comprenant une bascule de blocage de l'organe portatif dans le tunnel, déplaçable entre deux positions respectivement de libération de l'organe portatif et de coopération avec cet organe portatif, les moyens d'éjection comprenant une tringlerie, reliant l'organe de commande d'éjection et la bascule de blocage, destinée à coopérer avec le contacteur de démarrage/arrêt ;
- le contacteur de démarrage/arrêt est du type à levier, l'organe de commande d'éjection et la tringlerie coopérant avec le levier du contacteur de démarrage/arrêt pour l'actionner dans deux sens opposés, respectivement ;
- la tringlerie comprend une bascule de renvoi destinée à coopérer avec le levier du contacteur de démarrage/arrêt, l'organe de commande d'éjection étant relié à la bascule de renvoi par des moyens déformables élastiquement en compression sur une distance correspondant à une course morte de l'organe de commande d'éjection par rapport à la bascule de renvoi, lorsque cet organe de commande d'éjection est déplacé dans un sens d'actionnement du contacteur de démarrage/arrêt ;
- les moyens d'éjection sont entraînés par un moteur électrique ;
- les moyens de commande de démarrage et les moyens de commande d'arrêt comprennent respectivement un contacteur électrique de démarrage et un contacteur électrique d'arrêt, l'unité fixe comprenant une bascule de blocage de l'organe portatif dans le tunnel, déplaçable entre deux positions respectivement de libération de l'organe portatif et de coopération avec cet organe portatif, le contacteur électrique de démarrage étant actionné par la bascule de blocage et le contacteur électrique d'arrêt étant actionné par l'organe de commande d'éjection ;
- les moyens d'éjection comprennent des moyens à engrenages couplant la bascule de blocage et le moteur électrique, ce dernier étant piloté par le contacteur d'arrêt.

L'invention sera mieux comprise à la lecture de la description qui va suivre, donnée uniquement à titre d'exemple et faite en se référant aux dessins dans lesquels :
- la figure 1 est une vue en perspective d'un ensemble pour l'échange de données selon un premier mode de réalisation de l'invention ;
- la figure 2 est une vue en perspective éclatée de l'ensemble pour l'échange de données représenté sur la figure 1 ;
- les figures 3 à 5 sont des vues en perspective d'organes internes de l'ensemble pour l'échange de données représenté sur la figure 1, les points de vue des figures 4 et 5 étant opposés au point de vue de la figure 3 ;
- la figure 6 est une vue en perspective éclatée d'un ensemble pour l'échange de données selon un second mode de réalisation de l'invention ;
- les figures 7 et 8 sont des vues en perspective d'organes internes de l'ensemble pour l'échange de données représenté sur la figure 6.

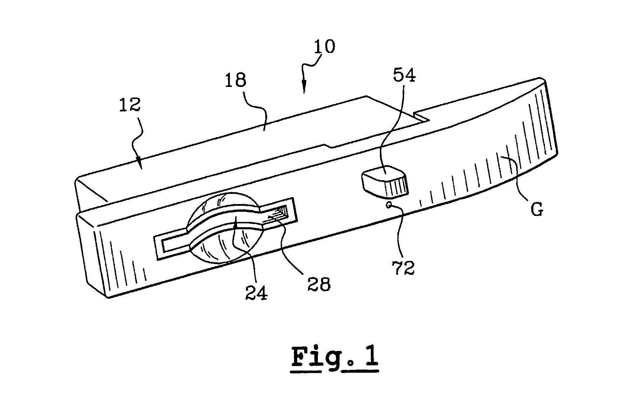

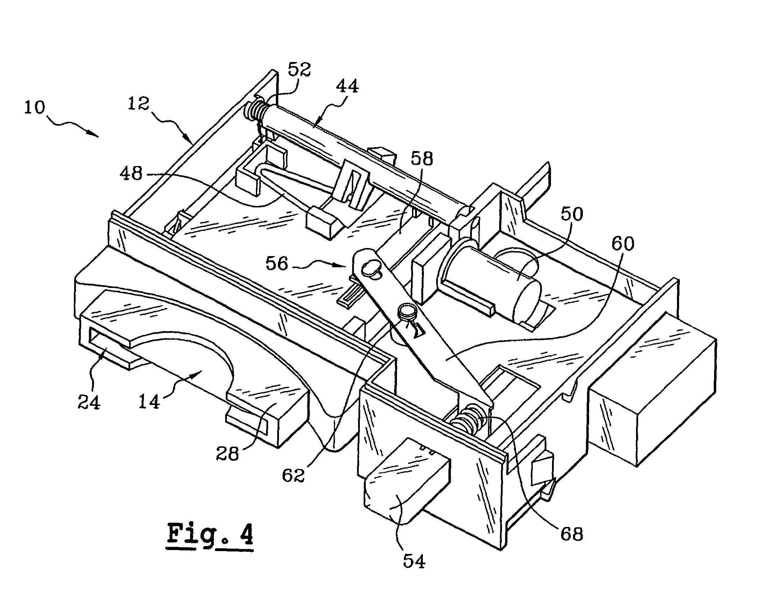

On a représenté sur les figures 1 à 5 un ensemble pour l'échange de données selon un premier mode de réalisation de l'invention, désigné par la référence générale 10.

Cet ensemble comprend une unité fixe 12 d'échange de données agencée dans un véhicule automobile, par exemple dans une planche de bord ou une console de l'habitacle de ce véhicule.

L'ensemble 10 comprend également un organe portatif 14 ou badge, de forme générale prismatique mince, destiné à être logé dans l'unité fixe 12.

L'unité fixe 12 assure une fonction d'antivol par traitement de données dont certaines, contenues dans l'organe portatif 14, sont représentatives d'au moins un utilisateur autorisé du véhicule. Les données représentatives de l'utilisateur sont stockées dans l'organe portatif 14 et traitées par l'unité fixe 12 à l'aide de moyens classiques.

Dans ce qui suit, un élément est qualifié de proximal lorsqu'il est proche de la main de l'utilisateur introduisant l'organe portatif dans l'unité fixe. Dans le cas contraire, l'élément est qualifié de distal. Par ailleurs, la direction générale de déplacement de l'organe portatif dans l'unité fixe est qualifiée de longitudinale.

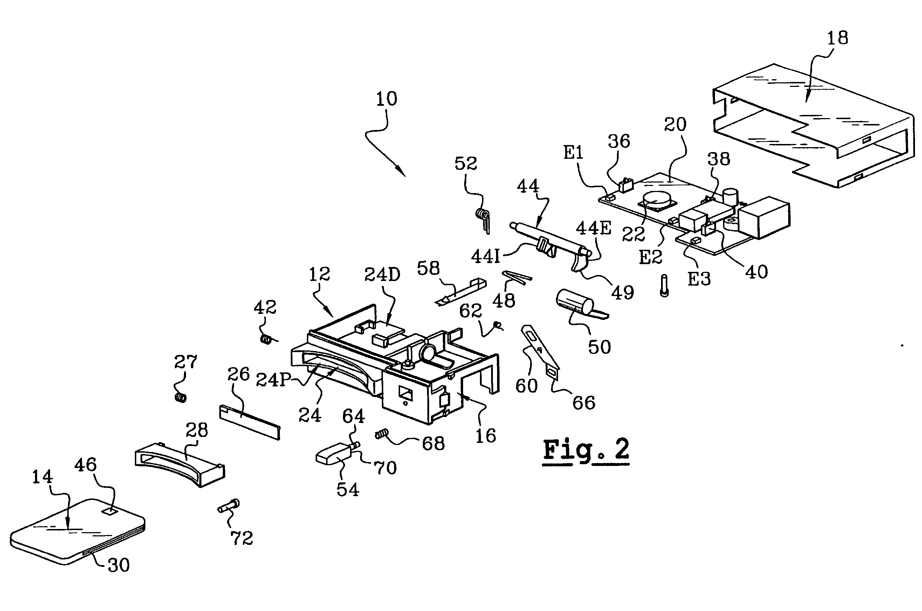

L'unité fixe 12 a une forme générale parallélépipédique. En se référant plus particulièrement à la figure 2, on voit que l'unité fixe 12 comprend un support 16 logé dans un boîtier 18. Un circuit imprimé 20, portant plusieurs composants classiques, est fixé sur le support 16, à l'intérieur du boîtier 18. Parmi ces composants classiques, on reconnaît notamment des moyens d'échange de données à transpondeur comprenant une bobine d'induction 22 destinée à interagir de façon électromagnétique avec des moyens complémentaires agencés dans l'organe portatif.

L'unité fixe est munie d'un tunnel 24 de logement de l'organe portatif 14 ayant une forme générale complémentaire de celle de l'organe portatif 14. Le tunnel 24 comprend des parties proximale 24P et distale 24D séparées par un volet mobile 26. Ce dernier est rappelé élastiquement vers une position d'obturation de la partie distale 24D du tunnel par un ressort à effet angulaire 27 illustré sur la figure 2. Le volet 26 est déplacé vers une position ouverte d'accès à la partie distale 24D du tunnel, à l'encontre de la force élastique de rappel du ressort 27, par coopération avec l'extrémité distale de l'organe portatif 14 introduit dans le tunnel.

Chaque partie 24P, 24D du tunnel comprend une extrémité opposée au volet 26 qui débouche vers l'extérieur de l'unité fixe 12. On notera que l'unité fixe 12 est habituellement agencée dans la planche de bord ou la console de l'habitacle de façon à masquer à l'égard de l'utilisateur l'extrémité débouchante de la partie distale 24D du tunnel. L'extrémité débouchante de la partie proximale 24D du tunnel forme l'extrémité d'accès au tunnel par laquelle est introduit l'organe portatif 14.

On notera donc que l'extrémité d'accès du tunnel 24 débouche dans une face transversale proximale F de l'unité fixe 12. De préférence, cette face d'accès F délimite une paroi solidaire du support 16. Sur la figure 1, on a représenté une façade G, recouvrant la face F, formant enjoliveur.

Dans l'exemple illustré, la partie proximale 24P du tunnel et son extrémité d'accès sont délimitées par un organe translucide 28 de diffusion de lumière, illustré notamment sur les figures 2, 4 et 5.

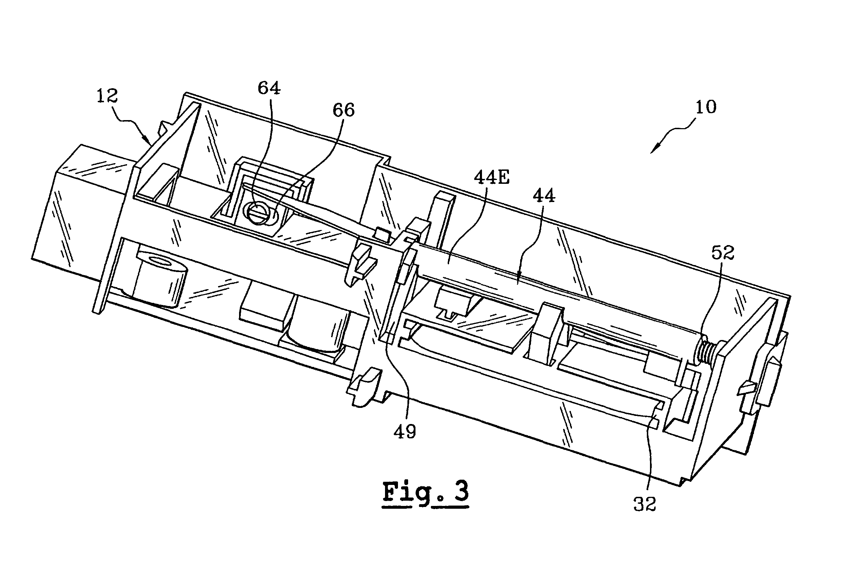

En se référant notamment aux figures 2 et 3, on voit que des rainures de guidage 30 sont ménagées sur des petites faces longitudinales de l'organe portatif 14. Ces rainures 30 sont destinées à coopérer par emboîtement avec des nervures complémentaires de guidage 32 ménagées sur des petites parois longitudinales correspondantes délimitant le tunnel 24.

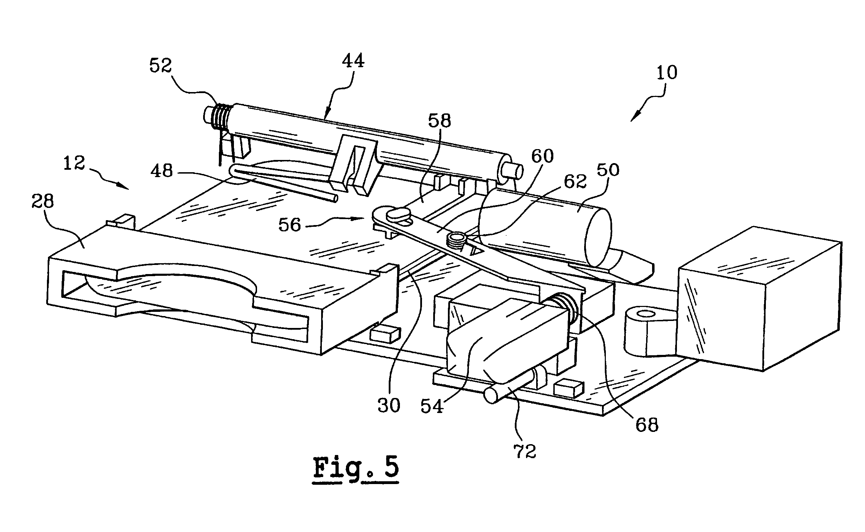

En se référant aux figures 2 et 5, on voit que le circuit imprimé 20 porte trois contacteurs électriques 36 à 40, de type classique à levier, disposés à l'extérieur du tunnel 24.

Un premier contacteur électrique 36 est destiné à activer un état de mise sous tension d'accessoires du véhicule. Le deuxième contacteur électrique 38 est destiné à activer un état de marche du véhicule. Le troisième contacteur électrique 40 est destiné à commander le démarrage ou l'arrêt du moteur d'entraînement du véhicule. Les trois contacteurs électriques seront appelés par la suite contacteurs d'accessoires 36, de marche 38 et de démarrage/arrêt 40.

Les contacteurs électriques d'accessoires 36 et de marche 38 sont destinés à être actionnés par l'organe portatif 14 par l'intermédiaire de moyens qui seront décrits ci-dessous.

En se référant notamment à la figure 2, on voit que le contacteur d'accessoires 36 est actionné par l'intermédiaire d'un doigt de commande 42 faisant saillie dans le tunnel 24. Ce doigt de commande 42 est destiné à coopérer avec une rainure de guidage correspondante 30 de l'organe portatif 14. Le doigt de commande 42 forme donc un élément intermédiaire de renvoi permettant à l'organe portatif 14 se déplaçant dans le tunnel 24 d'actionner le contacteur d'accessoires 36 disposé à l'extérieur de ce tunnel 24.

L'organe portatif 14 est déplaçable longitudinalement dans le tunnel 24 depuis l'extrémité d'accès de ce tunnel vers une position stable d'actionnement du contacteur de marche 38, en passant par une position intermédiaire, généralement temporaire, d'actionnement du contacteur d'accessoires 36.

De façon classique, l'organe portatif 14 est maintenu dans sa position stable d'actionnement du contacteur de marche 38 par une bascule de blocage 44 montée rotative dans l'unité fixe 12 autour d'un axe transversal à la direction longitudinale de déplacement de l'organe portatif 14. La bascule de blocage est munie d'une partie 44E externe au tunnel 24 et d'une partie 44I interne à ce tunnel 24 destinée à coopérer avec l'organe portatif 14, plus particulièrement avec le bord d'un orifice 46 de cet organe portatif 14 (voir figure 2).

De façon classique, la bascule de blocage 44 est déplaçable entre deux positions, respectivement, de libération de l'organe portatif 14 et de coopération avec cet organe portatif 14. Dans cette dernière position, la bascule de blocage 44 bloque l'organe portatif 14 dans sa position stable par emboîtement d'un bras de la partie interne 441 de la bascule dans l'orifice 46 de cet organe portatif.

La bascule de blocage 44 est rappelée vers chacune de ces deux positions de libération et de coopération avec l'organe portatif 14 par un ressort bistable classique 48, par exemple en forme générale d'épingle, comme cela est représenté sur les figures 2, 4 et 5. Conformément à un fonctionnement classique, la bascule de blocage 44 permet d'obtenir un effet d'avalement de l'organe portatif 14 au moment où cet organe 14 atteint sa position stable d'actionnement du contacteur de marche 38.

En se référant notamment aux figures 2 et 3, on voit que la partie externe 44E de la bascule est munie d'une came 49 d'actionnement du contacteur de marche 38.

Des moyens classiques 50 à électro-aimant forment une butée amovible d'interdiction du retour de la bascule de blocage 44 de sa position de coopération avec l'organe portatif 14 (correspondant à la position stable de l'organe portatif 14) vers sa position de libération, afin d'empêcher que l'organe portatif 14 soit inopportunément retiré de l'unité fixe 12 lorsque le véhicule est dans un état de marche. Ces moyens 50 à électro-aimant sont activés de façon connue en soi, respectivement désactivés, de préférence lors du démarrage, respectivement de l'arrêt, du moteur d'entraînement du véhicule.

Pour plus de précisions sur les aspects classiques du fonctionnement de la bascule de blocage 44 on pourra se référer utilement aux documents FR-A-2 779 563 (FR-98 07250) et FR-A-2 786 297 (FR-98 14571).

Le démarrage du moteur d'entraînement du véhicule est commandé par l'organe portatif 14. En effet, l'organe portatif 14 est déplaçable longitudinalement dans le tunnel 24 jusqu'à une position instable d'actionnement du contacteur de démarrage/arrêt 40 située au-delà de sa position stable par rapport à l'extrémité d'accès du tunnel 24. Entre ses positions stable et instable, l'organe portatif 14 est en prise avec la partie interne 44I de la bascule.

L'organe portatif 14 est rappelé depuis sa position instable vers sa position stable par des moyens élastiques comprenant de préférence un ressort 52 à effet angulaire agissant autour de l'axe de rotation de la bascule de blocage 44.

Ce ressort de rappel 52 a également un effet de poussée, parallèlement à l'axe de rotation de la bascule de blocage 44, de manière à former une entretoise élastique de positionnement axial de la bascule de blocage 44 favorisant le montage de cette dernière.

Le ressort de rappel 52 est précontraint de manière à exercer sur la bascule de blocage 44, lorsque l'organe portatif 14 est dans sa position stable, un effort opposé et supérieur à celui du ressort bistable 48. De préférence, lorsque l'organe portatif 14 est dans sa position stable, le ressort de rappel 52 exerce un effort deux à trois fois supérieur à celui du ressort bistable 48.

Afin de dissuader un utilisateur d'essayer d'extraire du tunnel 24 l'organe portatif 14 en saisissant son extrémité proximale, alors que le moteur d'entraînement du véhicule est en marche, l'organe 28 de diffusion de lumière a une forme générale adaptée pour limiter la zone de préhension de l'extrémité proximale de l'organe portatif lorsque ce dernier est en position stable. Cette forme de l'organe de diffusion de lumière 28 permet de faire obstacle à la traction de l'organe portatif 14 par l'utilisateur dans un sens de retrait de cet organe portatif 14 du tunnel tout en autorisant la poussée de l'organe portatif 14 par l'utilisateur dans un sens opposé au sens de retrait.

Pour retirer l'organe portatif 14 du tunnel 24, alors que ce dernier est dans sa position stable et le moteur d'entraînement du véhicule est à l'arrêt, l'unité fixe 12 comprend des moyens d'éjection de l'organe portatif 14 depuis sa position stable vers l'extérieur du tunnel 24. Ces moyens d'éjection comprennent un organe de commande 54, de préférence un bouton, porté par la face d'accès F de l'unité fixe 12.

Dans l'ensemble 10 selon le premier mode de réalisation de l'invention, les moyens d'éjection sont entraînés manuellement et comprennent une tringlerie 56 reliant le bouton de commande d'éjection 54 et la bascule de blocage 44.

Plus particulièrement, la tringlerie 56 comprend une tirette 58 reliée, d'une part, à la bascule de blocage 44 et, d'autre part, au bouton de commande d'éjection 54 par l'intermédiaire d'une bascule de renvoi 60. Le bouton de commande d'éjection 54 et la tirette 58 sont guidés longitudinalement par des moyens classiques ménagés dans le support 16. La bascule de renvoi 60 est montée pivotante sur le support 16 autour d'un axe orthogonal, d'une part, à la direction de guidage du bouton 54 et de la tirette 58 et, d'autre part, à l'axe de rotation de la bascule de blocage 44. La bascule de renvoi 60 est rappelée élastiquement vers une position de rapprochement de la tirette 58 vers l'extrémité d'accès du tunnel 24 par un ressort 62 à effet angulaire agencé autour de l'axe de pivotement de cette bascule de renvoi 60.

Le bouton de commande d'éjection 54 est muni d'un doigt de liaison 64 encliqueté dans un trou oblong 66 d'un bras de la bascule de renvoi 60, de façon à autoriser un jeu axial et transversal du doigt de liaison 64 dans le trou oblong 66. Le jeu axial du doigt de liaison 64 est rattrapé par un ressort 68, entourant le doigt de liaison 64, intercalé entre le bouton de commande d'éjection 54 et le bras de la bascule de renvoi 60 portant le trou oblong 66.

Le levier du contacteur de démarrage/arrêt 40 est destiné à coopérer, d'une part, avec une came 70 ménagée sur le bouton de commande d'éjection 54 et, d'autre part, le bras de la bascule de renvoi 60 portant le trou oblong 66. La came 70 du bouton de commande d'éjection 54 est destinée à actionner le contacteur de démarrage/arrêt 40 en déplaçant le levier de ce dernier dans un premier sens, à savoir un sens d'arrêt du moteur d'entraînement, alors que le bras de la bascule de renvoi 60 portant le trou oblong 66 est destiné à actionner le contacteur de démarrage/arrêt 40 en déplaçant le levier de ce dernier dans un second sens, opposé au précédent, à savoir un sens de démarrage du moteur d'entraînement.

Le ressort 68, de raideur plus faible que celle du ressort bistable 48, est déformable élastiquement en compression sur une distance correspondant à une course morte du bouton d'éjection 54 par rapport à la bascule de renvoi 60, lorsque ce bouton de commande d'éjection 54 est déplacé dans le sens d'actionnement du contacteur de démarrage/arrêt 40.

Un organe translucide de diffusion de lumière 72, associé au bouton de commande d'éjection 54, est disposé au voisinage de ce bouton 54. De préférence, cet organe de diffusion de lumière 72 est porté par le support 16 et agencé à travers la paroi délimitant la face d'accès F de façon à être visible par un utilisateur.

L'organe de diffusion de lumière 72, associé au bouton de commande d'éjection 54, et l'organe de diffusion de lumière 28, associé au tunnel 24, sont en liaison optique avec des diodes électroluminescentes E1 à E3 correspondantes portées par le circuit imprimé 20.

Les différentes combinaisons possibles des états lumineux des organes de diffusion de lumière 28, 72, codifiant visuellement différentes configurations de fonctionnement de l'unité fixe 12, informent l'utilisateur sur l'état de fonctionnement de l'unité fixe 12.

Le véhicule étant à l'arrêt, pour faire démarrer le moteur d'entraînement de ce véhicule, l'utilisateur procède de la façon suivante.

Tout d'abord, l'utilisateur introduit l'organe portatif 14 dans l'extrémité d'accès du tunnel 24 et pousse cet organe portatif 14 vers l'extrémité distale du tunnel 24.

L'organe portatif 14, poussé dans le tunnel 24, coopère initialement avec le doigt de commande 42, de façon à actionner le contacteur d'accessoires 36, puis poursuit sa course jusqu'à sa position stable dans laquelle il est en prise avec la bascule de blocage 44. A cette position stable de l'organe portatif 14 correspond une position de la came 49 de la bascule de blocage dans laquelle cette came actionne le contacteur de marche 38. L'effet d'avalement de l'organe portatif et la résistance qu'oppose le ressort de rappel 52 au déplacement de l'organe portatif 14 (via la partie interne de la bascule de blocage 44) indiquent à l'utilisateur que l'organe portatif 14 a atteint sa position stable.

Le bouton de commande d'éjection 54 étant relié à la bascule de blocage 44 par la tringlerie 56, l'effet d'avalement de l'organe portatif provoque le déplacement de ce bouton de commande d'éjection 54 depuis une position rentrée dans la face d'accès F (avant avalement de l'organe portatif) jusqu'à une position saillante par rapport à la face d'accès F (après avalement de l'organe portatif).

Pour commander le démarrage du moteur du véhicule, l'utilisateur pousse davantage l'organe portatif 14 vers l'extrémité distale du tunnel, en exerçant sur cet organe portatif 14 un effort suffisant pour vaincre la force élastique de rappel du ressort 52. L'organe portatif 14 atteint alors sa position instable qui est définie par exemple par la coopération de butées complémentaires de fin de course ménagées sur la partie interne 441 de la bascule de blocage et le support 16 de l'unité fixe 12. A la position instable de l'organe portatif 14 correspond une position de la bascule de renvoi 60 dans laquelle cette bascule de renvoi 60 actionne le levier du contacteur 40 dans son sens de démarrage.

Par ailleurs, lorsque l'organe portatif 14 atteint sa position instable, les moyens 50 à électroaimant, qui interdisent le retour de la bascule de blocage 44 vers sa position de libération de l'organe portatif, sont activés.

Après démarrage du moteur, l'utilisateur relâche l'organe portatif 14 qui est automatiquement rappelé par le ressort 52 vers sa position stable de marche du véhicule. En cas d'échec du démarrage du moteur, l'utilisateur repousse l'organe portatif 14 vers l'extrémité distale du tunnel autant de fois que cela est nécessaire pour obtenir le démarrage du véhicule.

Lorsque l'utilisateur souhaite arrêter le moteur d'entraînement du véhicule, il appuie sur le bouton de commande d'éjection 54.

Dans un premier temps, ce bouton 54 effectue sa course morte par rapport à la bascule de renvoi 60, à l'encontre de la force élastique de rappel du ressort 68. Au cours de cette course morte, le bouton de commande d'éjection 54 actionne le levier du contacteur 40 dans son sens d'arrêt. Ceci à pour effet d'arrêter le moteur d'entraînement du véhicule et de désactiver les moyens 50 à électroaimant.

Dans un deuxième temps, le bouton de commande d'éjection 54 entraîne la bascule de blocage 44 vers sa position de libération de l'organe portatif 14, par l'intermédiaire la tringlerie 56. L'utilisateur peut alors retirer le cas échéant l'organe portatif 14 du tunnel 24 en le saisissant par son extrémité proximale faisant nettement saillie à l'extérieur de ce tunnel.

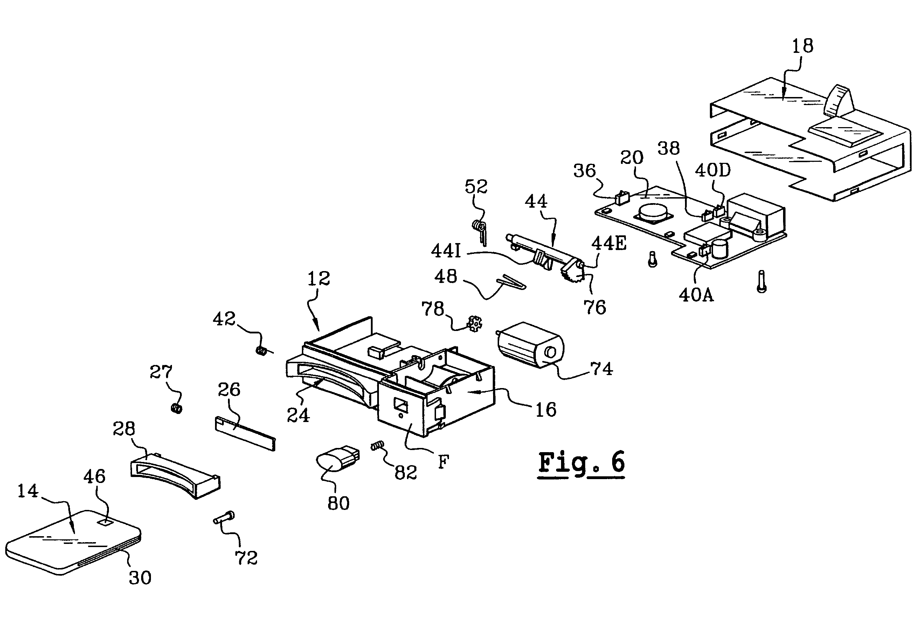

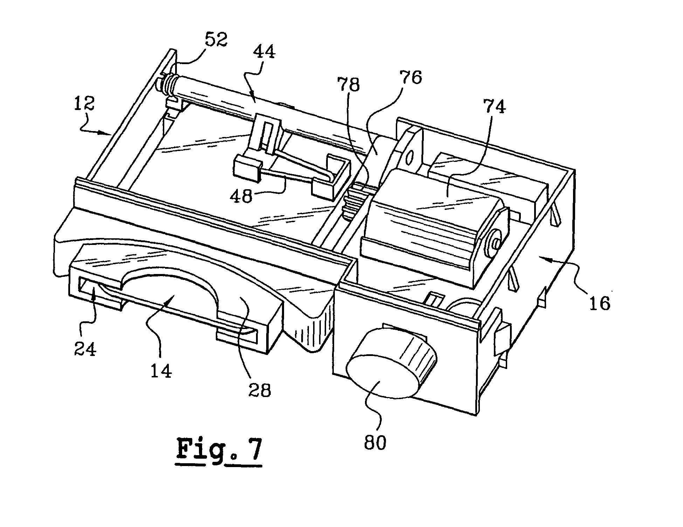

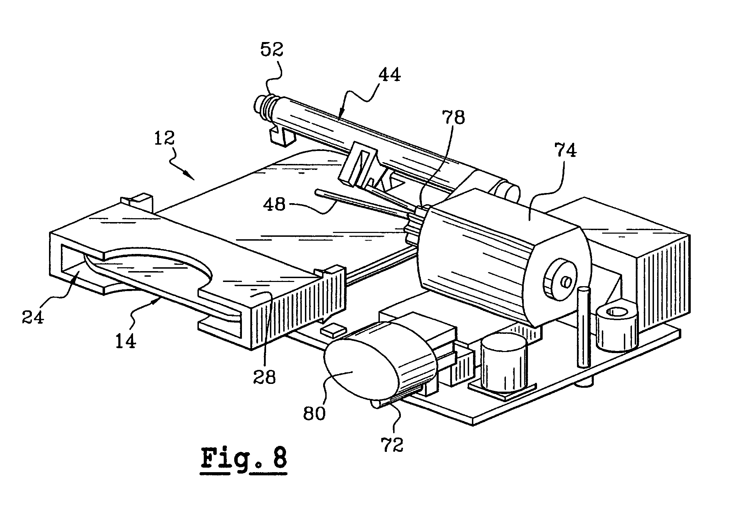

On a représenté sur les figures 6 à 8 un ensemble pour l'échange de données selon un second mode de réalisation de l'invention. Sur ces dernières figures, les éléments analogues à ceux des figures 1 à 5 sont désignés par des références identiques.

Dans ce cas, le circuit imprimé 20 comprend un contacteur électrique 40D destiné à commander le démarrage du moteur d'entraînement du véhicule, dit contacteur de démarrage 40D, et un contacteur électrique 40A destiné à commander l'arrêt du moteur d'entraînement du véhicule, dit contacteur d'arrêt 40A.

Ces deux contacteurs de démarrage 40D et d'arrêt 40A sont de type classique à levier et disposés à l'extérieur du tunnel 24.

Les moyens d'éjection sont entraînés dans ce cas par un moteur électrique 74, porté par le support 16, et comprennent des moyens à engrenages couplant la bascule de blocage 44 et ce moteur électrique 74. Dans l'exemple illustré, les moyens à engrenage comprennent un secteur denté 76, solidaire de la partie externe 44E de la bascule de blocage 44, engrenant avec un pignon 78, solidaire en rotation de l'arbre du moteur électrique 74. Le moteur électrique 74 est piloté par le contacteur d'arrêt 40A.

Les moyens d'éjection sont commandés par un bouton-poussoir 80 porté par la face d'accès F de l'unité fixe. Ce bouton-poussoir 80 est déplaçable entre une position de repos, vers laquelle il est rappelé élastiquement par un ressort 82, et une position d'actionnement du contacteur d'arrêt 40A.

Les contacteurs de marche 38 et de démarrage 40A sont actionnés par la came 49 qui, dans les figures 6 à 8, est masquée par le secteur denté 76.

De façon analogue au premier mode de réalisation de l'invention, l'organe portatif 14 est déplaçable longitudinalement dans le tunnel 24 jusqu'à une position instable d'actionnement du contacteur de démarrage 40D située au-delà de sa position stable par rapport à l'extrémité d'accès du tunnel 24. A cette position instable de l'organe portatif 14 correspond une position de la bascule de blocage 44 dans laquelle cette bascule 44 actionne le contacteur de démarrage 40D.

Pour arrêter le moteur d'entraînement du véhicule, l'utilisateur appuie sur le bouton-poussoir 80 de commande d'éjection. Ceci a pour effet d'actionner le contacteur d'arrêt 40A qui commande l'arrêt du moteur et active le moteur électrique 74 d'éjection de l'organe portatif. La bascule de blocage 44 est alors entraînée vers sa position de libération et l'utilisateur peut, le cas échéant, retirer l'organe portatif 14 du tunnel 24 en le saisissant par son extrémité proximale faisant nettement saillie à l'extérieur de ce tunnel.

On notera que les moyens à électroaimant 50 du premier mode de réalisation de l'invention ne sont plus nécessaires. En effet, dans le second mode de réalisation de l'invention, pour empêcher que l'organe portatif 14 soit inopportunément retiré de l'unité fixe 12 lorsque le véhicule est dans un état de marche, le moteur électrique 74 est alimenté électriquement de façon à interdire le retour de la bascule de blocage 44 de sa position de coopération avec l'organe portatif 14 (correspondant à la position stable de l'organe portatif 14) vers sa position de libération.

Par ailleurs, il est possible d'associer au bouton-poussoir 80 des moyens de temporisation classiques permettant d'obtenir, d'une part, qu'une pression brève exercée sur ce bouton-poussoir 80 commande uniquement l'arrêt du moteur d'entraînement du véhicule et, d'autre part, qu'une pression longue exercée sur le bouton-poussoir 80 commande l'arrêt de ce moteur et l'éjection de l'organe portatif 14.

Parmi les avantages de l'invention, on notera qu'elle permet notamment de dissuader l'utilisateur de retirer inopportunément l'organe portatif 14 du tunnel 24 du fait que l'extrémité d'accès de ce tunnel 24 est délimitée par un organe 28 limitant la zone de préhension de l'organe portatif 14 lorsque ce dernier est dans sa position stable. Par ailleurs, lorsque le véhicule est à l'arrêt, le retrait de l'organe portatif 14 du tunnel 24 est facile à réaliser grâce aux moyens d'éjection entraînés manuellement ou par un moteur électrique.

## Revendications

1. Ensemble pour véhicule automobile destiné à échanger des données dont certaines sont représentatives d'au moins un utilisateur autorisé du véhicule, du type comprenant :
- un organe portatif (14), formant un support pour les données représentatives d'au moins un utilisateur autorisé, et
- une unité fixe (12) d'échange de données, agencée dans le véhicule, destinée à assurer une fonction d'antivol par traitement de données, comprenant un tunnel (24) dans lequel l'organe portatif (14) est déplaçable longitudinalement depuis une extrémité d'accès de ce tunnel (24) vers une position stable activant un état de marche d'un moteur d'entraînement du véhicule,
- des moyens (40 ;40D) de commande de démarrage du moteur d'entraînement du véhicule actionnés par le déplacement de l'organe portatif (14) dans le tunnel (24) jusqu'à une position instable située au-delà de la position stable par rapport à l'extrémité d'accès du tunnel,
- des moyens (52) de rappel élastique de l'organe portatif (14) depuis sa position instable vers sa position stable, et
- des moyens (40 ;40A) de commande d'arrêt du moteur d'entraînement du véhicule,
**caractérisé en ce que** l'unité fixe (12) comprend de plus :
- l'unité fixe (12) d'échange de données comprenant également des moyens (54,56 ;74,80) d'éjection de l'organe portatif (14) depuis sa position stable vers l'extérieur du tunnel (24), les moyens [40,40a] de commande d'arrêt étant actionnés par un organe de commande (54 ;80) des moyens d'éjection.

2. Ensemble selon la revendication 1, **caractérisé en ce que** le tunnel (24) est muni d'une extrémité d'accès débouchant dans une face de l'unité fixe (12), dite face d'accès (F), l'organe de commande d'éjection (54 ;80) étant porté par la face d'accès (F) de l'unité fixe.

3. Ensemble selon l'une quelconque des revendications 1 à 2, **caractérisé en ce que** l'extrémité d'accès de ce tunnel (24) est délimitée par un organe (28) limitant la zone de préhension de l'organe portatif (14) lorsque ce dernier est dans sa position stable, afin de faire obstacle à la traction de l'organe portatif (14) par un utilisateur dans un sens de retrait de cet organe portatif (14) du tunnel tout en autorisant la poussée de l'organe portatif (14) par l'utilisateur dans un sens opposé au sens de retrait.

4. Ensemble selon l'une quelconque des revendications 1 à 3, **caractérisé en ce que** l'unité fixe (12) comprend un contacteur électrique (38) d'activation de l'état de marche du véhicule, dit contacteur de marche, actionné par l'organe portatif (14) en position stable.

5. Ensemble selon l'une quelconque des revendications 1 à 4, **caractérisé en ce que** les moyens d'éjection (54, 56) sont entraînés manuellement.

6. Ensemble selon les revendications 1 et 5 prises ensemble, **caractérisé en ce que** les moyens de commande de démarrage et les moyens de commande d'arrêt comprennent un contacteur électrique commun, dit contacteur de démarrage/arrêt (40), l'unité fixe (12) comprenant une bascule (44) de blocage de l'organe portatif (14) dans le tunnel (24), déplaçable entre deux positions respectivement de libération de l'organe portatif (14) et de coopération avec cet organe portatif (14), les moyens d'éjection comprenant une tringlerie (56), reliant l'organe de commande d'éjection (54) et la bascule de blocage (44), destinée à coopérer avec le contacteur de démarrage/arrêt (40).

7. Ensemble selon la revendication 6, **caractérisé en ce que** le contacteur de démarrage/arrêt (40) est du type à levier, l'organe de commande d'éjection (54) et la tringlerie (56) coopérant avec le levier du contacteur de démarrage/arrêt (40) pour l'actionner dans deux sens opposés, respectivement.

8. Ensemble selon la revendication 7, **caractérisé en ce que** la tringlerie (56) comprend une bascule de renvoi (60) destinée à coopérer avec le levier du contacteur de démarrage/arrêt (40), l'organe de commande d'éjection (54) étant relié à la bascule de renvoi (60) par des moyens (68) déformables élastiquement en compression sur une distance correspondant à une course morte de l'organe de commande d'éjection (54) par rapport à la bascule de renvoi (60), lorsque cet organe de commande d'éjection (54) est déplacé dans un sens d'actionnement du contacteur de démarrage/arrêt (40).

9. Ensemble selon l'une quelconque des revendications 1 à 4, **caractérisé en ce que** les moyens d'éjection sont entraînés par un moteur électrique (74).

10. Ensemble selon les revendications 1 et 9 prises ensemble, **caractérisé en ce que** les moyens de commande de démarrage et les moyens de commande d'arrêt comprennent respectivement un contacteur électrique de démarrage (40D) et un contacteur électrique d'arrêt (40A), l'unité fixe (12) comprenant une bascule (44) de blocage de l'organe portatif (14) dans le tunnel (24), déplaçable entre deux positions respectivement de libération de l'organe portatif (14) et de coopération avec cet organe portatif (14), le contacteur électrique de démarrage (40D) étant actionné par la bascule de blocage (44) et le contacteur électrique d'arrêt (40A) étant actionné par l'organe de commande d'éjection (80).

11. Ensemble selon la revendication 10, **caractérisé en ce que** les moyens d'éjection comprennent des moyens à engrenages (76, 78) couplant la bascule de blocage (44) et le moteur électrique (74), ce dernier étant piloté par le contacteur d'arrêt (40A).

## Patentansprüche

1. Vorrichtung für Kraftfahrzeuge, die dazu bestimmt ist, Daten auszutauschen, von denen bestimmte repräsentativ für mindestens einen berechtigten Kraftfahrzeug-Benutzer sind, vom Typ mit:
- einem tragbaren Organ (14), das einen Datenträger für die Daten bildet, die für mindestens einen berechtigten Benutzer repräsentativ sind, und
- einer festen Datenaustauscheinheit (12), die im Fahrzeug angeordnet und dazu bestimmt ist, eine Diebstahlschutzfunktion durch Datenverarbeitung zu gewährleisten, und einen Schacht (24) enthält, in welchem das tragbare Organ (14) in Längsrichtung von einem Zugangsende dieses Schachts (24) zu einer stabilen Stellung verlagerbar ist, welche einen Betriebszustand eines Fahrzeugantriebsmotors aktiviert,
- Mitteln (40; 40D) zum Steuern des Anlassens des Fahrzeugantriebsmotors, die durch Verlagerung des tragbaren Organs (14) im Schacht in eine instabile Stellung betätigt werden, die sich bezüglich des Schachtzugangsendes jenseits der stabilen Stellung befindet,
- Mitteln (52) zur federnden Rückstellung des tragbaren Organs (14) aus seiner instabilen Stellung in seine stabile Stellung, und
- Mitteln (40; 40A) zum Steuern des Abstellens des Fahrzeugantriebsmotors,
**dadurch gekennzeichnet, dass** die feste Datenaustauscheinheit (12) ferner Mittel (54, 56; 74, 80) zum Auswerfen des tragbaren Organs (14) aus seiner stabilen Stellung nach außerhalb des Schachts (24) enthält, wobei die Abstellsteuermittel (40, 40A) von einem Steuerglied (54; 80) zum Steuern der Auswurfmittel betätigt werden.

2. Vorrichtung nach Anspruch 1, **dadurch gekennzeichnet, dass** der Schacht (24) mit einem Zugangsende ausgestattet ist, das in eine Seite, die sogenannte Zugangsseite (F), der festen Einheit (12) mündet, wobei das Auswurfsteuerglied (54; 80) von der Zugangsseite (F) der festen Einheit getragen wird.

3. Vorrichtung nach einem der Ansprüche 1 und 2, **dadurch gekennzeichnet, dass** das Zugangsende dieses Schachts (24) von einem Glied (28) eingegrenzt wird, das den Greifbereich des tragbaren Organs (14) begrenzt, wenn letzteres sich in seiner stabilen Stellung befindet, um das Abziehen des tragbaren Organs (14) durch einen Benutzer in einer Abzugsrichtung dieses tragbaren Organs (14) aus dem Schacht zu behindern und das Einschieben des tragbaren Organs (14) durch den Benutzer in einer der Abzugsrichtung entgegengesetzten Richtung zu gestatten.

4. Vorrichtung nach einem der Ansprüche 1 bis 3, **dadurch gekennzeichnet, dass** die feste Einheit (12) einen elektrischen Kontaktgeber (38), den sogenannten Betriebskontaktgeber, zum Aktivieren des Betriebszustands des Fahrzeugs enthält, der von dem tragbaren Organ (14) in stabiler Stellung betätigt wird.

5. Vorrichtung nach einem der Ansprüche 1 bis 4, **dadurch gekennzeichnet, dass** die Auswurfmittel (54, 56) manuell angetrieben werden.

6. Vorrichtung nach Anspruch 1 und 5 in Kombination, **dadurch gekennzeichnet, dass** die Anlasssteuermittel und die Abstellsteuermittel einen gemeinsamen elektrischen Kontaktgeber enthalten, den sogenannten Anlass/Abstellkontaktgeber (40), wobei die feste Einheit (12) einen Kippschalter (44) zum Sichern des tragbaren Organs (14) im Schacht (24) enthält, der zwischen zwei Stellungen zum Freigeben des tragbaren Organs (14) bzw. zum Zusammenwirken mit diesem tragbaren Organ (14) verstellbar ist, wobei die Auswurfmittel ein Gestänge (56) enthalten, welches das Auswurfsteuerglied (54) und den Sicherungskippschalter (44) verbindet, der dazu bestimmt ist, mit dem Anlass-/Abstellkontaktgeber (40) zusammenzuwirken.

7. Vorrichtung nach Anspruch 6, **dadurch gekennzeichnet, dass** der Anlass/Abstellkontaktgeber (40) vom Typ mit einem Hebel ist, wobei das Auswurfsteuerglied (54) und das Gestänge (56) mit dem Hebel des Anlass/Abstellkontaktgebers (40) zusammenwirken, um ihn jeweils in zwei entgegengesetzten Richtungen zu betätigen.

8. Vorrichtung nach Anspruch 7, **dadurch gekennzeichnet, dass** das Gestänge (56) einen Umlenkkippschalter (60) enthält, der dazu bestimmt ist, mit dem Hebel des Anlass-/Abstellkontaktgebers (40) zusammenzuwirken, wobei das Auswurfsteuerglied (54) mit dem Umlenkkippschalter (60) über Mittel (68) verbunden ist, die über einen Abstand elastisch druckverformbar sind, der einem Totgang des Auswurfsteuerglieds (54) bezüglich des Umlenkkippschalters (60) entspricht, wenn dieses Auswurfsteuerglied (54) in einer Betätigungsrichtung des Anlass-/Abstellkontaktgebers (40) verlagert wird.

9. Vorrichtung nach einem der Ansprüche 1 bis 4, **dadurch gekennzeichnet, dass** die Auswurfmittel von einem Elektromotor (74) angetrieben werden.

10. Vorrichtung nach Anspruch 1 und 9 in Kombination, **dadurch gekennzeichnet, dass** die Anlasssteuermittel und die Abstellsteuermittel jeweils einen elektrischen Anlasskontaktgeber (40D) bzw. einen elektrischen Abstellkontaktgeber (40A) enthalten, wobei die feste Einheit (12) einen Kippschalter (44) zum Sichern des tragbaren Organs (14) im Schacht (24) enthält, der zwischen zwei Stellungen zum Freigeben des tragbaren Organs (14) bzw. zum Zusammenwirken mit diesem tragbaren Organ (14) verstellbar ist, wobei der elektrische Anlasskontaktgeber (40D) von dem Sicherungskippschalter (44) und der elektrische Abstellkontaktgeber (40A) von dem Auswurfsteuerglied (80) betätigt wird.

11. Vorrichtung nach Anspruch 10, **dadurch gekennzeichnet, dass** die Auswurfmittel Getriebemittel (76, 78) enthalten, welche den Sicherungskippschalter (44) und den Elektromotor (74) koppeln, wobei letzter von dem Abstellkontaktgeber (40A) angesteuert wird.

## Claims

1. Assembly for a motor vehicle intended to exchange data, some of which represent at least one authorised user of the vehicle, of the type comprising:
- a portable device (14), forming a support for the data representing at least one authorised user, and
- a fixed data exchange unit (12), arranged in the vehicle, intended to fulfil an anti-theft function by data processing, comprising a tunnel (24) in which the portable device (14) is able to move longitudinally from an access end of this tunnel (24) towards a stable position activating a running state of an engine driving the vehicle,
- means (40; 40D) controlling the starting of the engine driving the vehicle actuated by the movement of the portable device (14) in the tunnel (24) as far as an unstable position situated beyond the stable position with respect to the access end of the tunnel,
- means (52) of elastic return of the portable device (14) from its unstable position to its stable position, and
- means (40; 40A) controlling the stoppage of the engine driving the vehicle,
**characterised in that** the fixed unit (12) also comprises:
- the fixed data exchange unit (12) also comprising means (54, 56; 74, 80) of ejecting the portable device (14) from its stable position to the outside of the tunnel (24),
the stoppage control means (40, 40A) being actuated by a device (54; 80) controlling the ejection means.

2. Assembly according to Claim 1, **characterised in that** the tunnel (24) is provided with an access end opening out in a face of the fixed unit (12), referred to as the access face (F), the ejection control device (54; 80) being carried by the access face (F) of the fixed unit.

3. Assembly according to either one of Claims 1 to 2, **characterised in that** the access end of this tunnel (24) is delimited by a device (28) delimiting the gripping area of the portable device (14) when the latter is in its stable position, in order to form an obstacle to the pulling of the portable device (14) by a user in a direction of withdrawing this portable device (14) from the tunnel whilst allowing the pushing of the portable device (14) by the user in a direction opposite to the withdrawal direction.

4. Assembly according to any one of Claims 1 to 3, **characterised in that** the fixed unit (12) comprises an electrical contactor (38) for activating the running state of the vehicle, referred to as the running contactor, actuated by the portable device (14) in the stable position.

5. Assembly according to any one of Claims 1 to 4, **characterised in that** the ejection means (54, 56) are driven manually.

6. Assembly according to Claims 1 and 5 taken together, **characterised in that** the starting control means and the stopping control means comprise a common electrical contactor, referred to as the starting/stopping contactor (4), the fixed unit (12) comprising a rocker (44) for locking the portable device (14) in the tunnel (24), able to move between two positions respectively of releasing the portable device (14) and of cooperating with this portable device (14), the ejection means comprising a linkage (56), connecting the ejection control device (54) and the locking rocker (44), intended to cooperate with the starting/stopping contactor (40).

7. Assembly according to Claim 6, **characterised in that** the starting/stopping contactor (40) is of the lever type, the ejection control device (54) and the linkage (56) cooperating with the lever of the starting/stopping contactor (40) in order to actuate it in two opposite directions, respectively.

8. Assembly according to Claim 7, **characterised in that** the linkage (56) comprises a return rocker (60) intended to cooperate with the lever of the starting/stopping contactor (40), the ejection control device (54) being connected to the return rocker (60) by means (68) which are elastically deformable under compression over a distance corresponding to a dead travel of the ejection control device (54) with respect to the return locker (60), when this ejection control device (54) is moved in a direction of actuation of the starting/stopping contactor (40).

9. Assembly according to any one of Claims 1 to 4, **characterised in that** the ejection means are driven by an electric motor (74).

10. Assembly according to Claims 1 and 9 taken together, **characterised in that** the starting control means and the stopping control means comprise respectively an electrical starting contactor (40D) and an electrical stopping contactor (40A), the fixed unit (12) comprising a rocker (44) for locking the portable device (14) in the tunnel (24), able to move between two positions respectively of release of the portable device (14) and of cooperation with this portable device (14), the electrical starting contactor (40D) being actuated by the locking rocker (44) and the electrical stopping contactor (40A) being actuated by the ejection control device (80).

11. Assembly according to Claim 10, **characterised in that** the ejection means comprise geared means (76, 78) coupling the locking rocker (44) and the electric motor (74), the latter being controlled by the stopping contactor (40A).
